# EUROPÄISCHE PATENTSCHRIFT

(11) **EP 2 342 889 B1**
(45) Veröffentlichungstag und Bekanntmachung des Hinweises auf die Patenterteilung: **30.09.2015**
(21) Anmeldenummer: 08875282.9
(22) Anmeldetag: 05.11.2008
(51) Int. Cl.: H04M 1/21, H04M 1/02, A61J 7/00, A61J 7/04, A45C 15/00, A45C 11/18, A45C 11/32

(54) **MOBILTELEFONGEHÄUSESTRUKTUR MIT EINEM AUFNAHMEFACH**
MOBILE TELEPHONE HOUSING STRUCTURE HAVING A RECEPTACLE
STRUCTURE DE BOÎTIER DE TÉLÉPHONE MOBILE AVEC COMPARTIMENT D' ACCUEIL

(43) Veröffentlichungstag der Anmeldung: 13.07.2011
(73) Patentinhaber: Papenmeier, Iris, Singapur 679037 (SG)
(72) Erfinder: Papenmeier, Iris, Singapur 679037 (SG)
(74) Vertreter: Schwabe - Sandmair - Marx
(86) Internationale Anmeldenummer: PCT/EP2008/065015
(87) Internationale Veröffentlichungsnummer: WO 2010/051840

(56) Entgegenhaltungen:
- EP-A- 0 813 855
- WO-A-2006/047649
- DE-A1-102005 015 010
- DE-U1- 20 302 108
- DE-U1- 29 918 709
- DE-U1-202006 015 537
- US-A1- 2007 029 225
- US-A1- 2007 180 873
- US-A1- 2007 184 812
- US-A1- 2008 255 874
- US-B1- 7 146 184

## Beschreibung

Die Erfindung betrifft eine Gehäusestruktur für ein Mobiltelefon, die ein Aufnahmefach zur Aufnahme von nicht dem Mobiltelefon zuzuordnenden Gegenständen umfasst oder zusammen mit weiteren zur Gehäusestruktur gehörenden Strukturen ein solches Aufnahmefach umfasst.

Die Verbreitung von Mobiltelefonen steigt in den letzten Jahren stetig, so dass davon auszugehen ist, dass nahezu jede Person ein Mobiltelefon besitzt und demzufolge auch ständig mit sich führt. Ferner werden von den meisten Personen auch eine Vielzahl von weiteren Gebrauchsgegenständen mitgeführt, wie beispielsweise Schlüssel, Kreditkarten, Schreibstifte, Kleingeld, Spiegel und Kosmetika. Hierbei kann es leicht vorkommen, dass bei einer Vielzahl von solchen Gegenständen in Kleidungstaschen oder Handtaschen einzelne Gegenstände nicht sofort auffindbar sind.

Die DE 20 2006 015 537 U1 betrifft ein Kommunikationsgerät mit integrierten Aufnahmefächern, die aus dem Gerät herausgezogen und in das Gerät eingeschoben werden können. Die US 2008/0255874 A1 betrifft ein System und eine Methode um klinische Informationen an einen Patienten zu versenden. Die US 7 164 184 B1 betrifft ein Mobiltelefon, das mit einem Behälter für Kosmetika verbunden ist. Aus der US 2007/0184812 A1 ist ein Mobiltelefon mit diversen Aufnahmefächern für Gegenstände, bekannt. In die Aufnahmefächer können Behälter eingegeben werden oder die Aufnahmefächer können durch einen Verschluss verschlossen werden. Die WO 2006/047649 A2 beschreibt einen Behälter, der direkt mit einem Mobiltelefon verbunden werden kann, wobei das Gehäuse des Mobiltelefons und der Behälter gemeinsam einen Aufnahmeraum für einen Gegenstand verschließen können. Ein Mobiltelefon mit einem damit verbundenen Behälter für Schminkutensilien ist aus der US 2007/0029225 A1 bekannt, wobei das Mobiltelefon den Deckel für den Behälter bilden kann. Die EP 0 813 855 A2 beschreibt ein Mobiltelefon mit einem Tablettenspender, wobei das Mobiltelefon einen Patienten informiert, wenn eine Tablette eingenommen werden muss. Ein Mobiltelefon zum virtuellen Verwalten von Medikamenten und zur Erinnerung an die Einnahmezeiten ist auch aus der DE 299 18 709 U1 bekannt. Eine Mobiltelefon mit Aufnahmefächer für Geld oder Kondome ist in der DE 203 02 108 U1 beschrieben. Die DE 10 2005 015 010 A1 beschreibt einen Tablettenspender, der in ein Mobiltelefon integriert ist. Das Mobiltelefon kann den Patienten automatisch informieren, wenn er seine Tablette nehmen muss. Dieser kann dann durch Betätigung einer Ausgabemechanik die Ausgabe der Tablette aus dem Aufnahmefach bewirken. Die US 2007/0180873 A1 betrifft einen verschließbaren Behälter, der beispielsweise am Gürtel getragen werden kann.

Zu Problemen führt dies insbesondere in Situationen, in denen wichtige Gegenstände sofort aufgefunden werden müssen, wie beispielsweise sofort einzunehmende Medikamente. Ferner werden oftmals wichtige Gegenstände, beispielsweise Kreditkarten, zu Hause vergessen.

Es sind also weitläufig Situationen bekannt, in denen ein momentan benötigter Gegenstand nicht zur Verfügung steht, da er andernorts vergessen wurde oder dass die Suche nach einem dringend benötigten Gegenstand viel Zeit in Anspruch nimmt.

Die vorliegende Erfindung hat sich zur Aufgabe gemacht, ein Mobiltelefon zur Verfügung zu stellen, in dem Gegenstände sicher aufbewahrt werden können.

Diese Aufgabe wird durch den Gegenstand des Anspruchs 1 gelöst. Die Unteransprüche definieren dabei bevorzugte Ausführungsformen der vorliegenden Erfindung.

Erfindungsgemäß begrenzt eine Mobiltelefon-Gehäusestruktur zumindest teilweise ein zusätzliches Aufnahmevolumen, in welchem Gegenstände aufgenommen werden können, die nicht notwendigerweise zum Betrieb des Mobiltelefons erforderlich sind bzw. telefonfremde Gegenstände sind.

In diesem Zusammenhang soll darauf hingewiesen werden, dass nahezu jedes bekannte Mobiltelefon Aufnahmefächer, Einschubfächer oder Aussparungen aufweist, in denen dem Mobiltelefon zuzuordnende Gegenstände aufgenommen werden können. Dies betrifft beispielsweise Batterien oder Akkumulatoren (auch im Telefon mitgeführte Ersatzbatterien und Ersatzakkumulatoren) zur Stromversorgung des Mobiltelefons, Speichermedien wie SIM-Karten oder Speicherkarten und ebenso Eingabegeräte wie beispielsweise Eingabestifte zur Benutzung des berührungsempfindlichen Telefonbildschirms. Was die vorliegende Erfindung betrifft, so können die oben genannten Aufnahmefächer, Einschubfächer oder Ausnehmungen für solche Gegenstände selbstverständlich auch von der erfindungsgemäßen Mobiltelefon-Gehäusestruktur umfasst sein, jedoch existiert neben diesen noch ein zusätzliches Aufnahmefach, welches beliebige Gegenstände, auch solche, die nicht dem Mobiltelefon zuzuordnen sind und nicht für dessen Gebrauch bestimmt sind, aufnehmen kann. So ist es auch denkbar, dass das erfindungsgemäße Aufnahmefach bzw. Aufnahmevolumen bei betriebsbereitem Mobiltelefon leer bleibt. Es soll also nochmals hervorgehoben werden, dass neben den üblichen Aufnahmefächern, Einschubfächern oder Ausnehmungen eines Mobiltelefons noch eine weitere Aufnahme in Form eines Faches oder eines Volumens von der Gehäusestruktur umfasst wird. Mit anderen Worten kann das erfindungsgemäße Mobiltelefon bzw. die erfindungsgemäße Mobiltelefon-Gehäusestruktur eines oder mehrere der folgenden Elemente umfassen:
- ein Aufnahmefach zur Aufnahme von Batterien oder Akkumulatoren zur Energieversorgung des Mobiltelefons
- ein Aufnahme- bzw. Einschubfach für Speicherkarten bzw. SIM-Karten
- ein Aufnahmefach bzw. Einschubfach für Eingabegeräte wie Eingabestifte, wobei zusätzlich zu den oben genannten "Fächern" mindestens ein Aufnahmefach vorhanden ist, in welchem beliebige Gegenstände aufgenommen werden können.
Ferner ist es denkbar, dass zu einer vorhandenen Mobiltelefon-Gehäusestruktur ein Aufnahmefach in Form eines Einsatzes für beispielsweise ein bestehendes Batteriefach bereitgestellt wird, wobei zusätzlich ein Akkumulator bereitgestellt wird, welcher in seinen Ausmaßen kleiner ist als der eigentlich für das Mobiltelefon vorgesehene Akkumulator. So kann das freiwerdende Volumen im Akkumulatorenfach dazu genutzt werden, beliebige Gegenstände im Sinne der vorliegenden Erfindung aufzunehmen.

Der Begriff "umfassen" soll in diesem Zusammenhang so verstanden werden, dass das zusätzliche Aufnahmevolumen nicht notwendigerweise innerhalb der Gehäusestruktur bzw. vollständig von der Gehäusestruktur umgeben angeordnet ist, sondern auch, dass die Gehäusestruktur lediglich eine Ausnehmung als Aufnahmevolumen aufweist, die auch stets geöffnet sein kann. So soll jegliches Volumen, welches gänzlich innerhalb, nur teilweise innerhalb oder gänzlich außerhalb der Erstreckung der Mobiltelefongehäusestruktur und an dieser angrenzend angeordnet ist, als Aufnahmevolumen verstanden werden. Auch kann ein solches Aufnahmevolumen stets offen bleiben oder es kann ferner ein Verschluss vorgesehen sein, mit welchem das Aufnahmevolumen gegenüber der Umgebung abgetrennt werden kann.

Die Gehäusestruktur stellt einen Teil einer das Aufnahmevolumen umgebenden Grenzfläche dar. So ist es vorstellbar, dass die Gehäusestruktur bzw. das Mobiltelefon als eine Art Deckel einer zugehörigen Aufnahmestruktur dient. Somit wird bei geschlossenem Deckel von der Aufnahmestruktur und der Gehäusestruktur ein Aufnahmevolumen gänzlich umgeben bzw. von der Umwelt abgegrenzt. Beispielsweise kann die Gesamtheit aus Aufnahmestruktur und Gehäusestruktur als eine Art Schachtel oder Schatulle angesehen werden, bei der die Gehäusestruktur des Mobiltelefons als Deckel dient, wobei die Aufnahmestruktur als der eigentliche Schatullenkörper oder Schachtelkörper fungiert. Im Spezialfall eines quaderförmigen Aufnahmevolumens wird also beispielsweise lediglich eine Begrenzungsfläche von der Gehäusestruktur dargestellt, während die übrigen fünf Begrenzungsflächen dem Aufnahmevolumen zuzuordnen sind. Selbstverständlich ist auch der umgekehrte Fall möglich, bei dem die Gehäusestruktur fünf Seiten, die Aufnahmestruktur in der Art eines Deckels lediglich eine Begrenzungsfläche darstellt. Zusammenfassend lässt sich sagen, dass sowohl Gehäusestruktur als auch Aufnahmestruktur einen beliebigen Teil der Begrenzungsfläche darstellen können, jedoch insgesamt immer eine vollständige Abgrenzung des Aufnahmevolumens durch die Aufnahmestruktur und die Gehäusestruktur gegeben ist. Möglich wäre auch eine bei geschlossener Schatulle oder Schachtel geöffnet bleibende Öffnung in der Art eines Luftlochs, so dass das Aufnahmevolumen nur in einem wesentlichen Teil seiner Umfangsfläche von Gehäusestruktur und Aufnahmevolumen von der Umwelt abgegrenzt ist.

Weiterhin ist eine beliebige geometrische Ausgestaltung des Aufnahmevolumens denkbar, bevorzugt wird jedoch aufgrund geläufiger Abmaße eines Mobiltelefons eine annähernd quaderförmige Ausgestaltung des Aufnahmevolumens, so dass die Gehäusestruktur zusammen mit der Aufnahmestruktur leicht in Kleidungstaschen oder Handtaschen verstaut werden kann.

Die Vorteile eines solchen Aufnahmevolumens bzw. eines Aufnahmefaches bestehen darin, dass die meisten Personen ohnehin stets ein Mobiltelefon mit sich führen, so dass davon auszugehen ist, dass beim Verstauen eines oft benötigten Gegenstandes, beispielsweise einer Kreditkarte oder wichtiger Medikamente im Aufnahmefach dieser Gegenstand auch stets mitgeführt wird. Somit können solche Gegenstände nicht so leicht vergessen oder verlegt werden. Ferner stellt ein Mobiltelefon allein aufgrund seiner Größe einen auffälligen Gegenstand dar, der unter einer Vielzahl von anderen mitgeführten Gegenständen relativ leicht ausfindig gemacht werden kann. So ist die Suche nach dem im Aufnahmefach des Mobiltelefons aufbewahrten Gegenstand vergleichsweise einfach. Dabei spielt es keine Rolle, ob das Aufnahmevolumen bzw. das Aufnahmefach als stets offen stehender Einschub oder als eine offene Aufnahme in oder an der Gehäusestruktur des Mobiltelefons ausgebildet ist oder ein gegenüber der Umwelt abgrenzbares Fach darstellt, solange nur die Gewissheit besteht, dass ein bestimmter Gegenstand stets am gleichen Ort, nämlich im Aufnahmevolumen des Mobiltelefons aufzufinden ist.

Ein weiterer großer Vorteil der vorliegenden Erfindung ist es, dass ohnehin bei Mobiltelefonen vorhandene Soft- und Hardware dazu genutzt werden kann, insbesondere ältere oder vergessliche Menschen darauf aufmerksam zu machen, ihre Medikamente einzunehmen. Da die meisten Mobiltelefone dem Benutzer einen Anruf akustisch mitteilen und diese Mitteilung gegebenenfalls durch optische Signale oder durch Vibration unterstützt werden, besteht ebenso die Möglichkeit, den Benutzer durch diese oder ähnliche Mitteilungsmöglichkeiten an das Öffnen des Aufnahmevolumens bzw. Aufnahmefaches am Mobiltelefon und die Einnahme von Medikamenten zu erinnern. So ist es denkbar, dass ältere oder vergessliche Personen, die auf Medikamente angewiesen sind, einen gewissen Vorrat dieser Medikamente im Aufnahmevolumen bzw. Aufnahmefach des Mobiltelefons vorrätig halten und zum gegebenen Zeitpunkt an die Einnahme dieser Medikamente durch Klingeln, Blinken und/oder Vibrieren des Mobiltelefons an die Einnahme dieser Medikamente erinnert werden. So muss die betreffende Person nicht stets von einer betreuenden Person an die Einnahme der Medikamente erinnert werden.

Ebenso ist es denkbar, dass im Aufnahmevolumen bzw. Aufnahmefach der Mobiltelefon-Gehäusestruktur unterschiedliche Medikamente aufbewahrt werden, wobei dem Benutzer beispielsweise durch Anzeige im Display mitgeteilt wird, welche Medikamente er nun einzunehmen hat.

Ebenso kann die Dosierung der einzunehmenden Medikamente zum gegebenen Zeitpunkt dem Benutzer mitgeteilt werden, beispielsweise durch eine Anzeige im Display des Mobiltelefons.

Es lässt sich also sagen, dass bekannte Mobiltelefone "inaktive" Fächer besitzen, die zur Aufnahme von Akkumulatoren, Eingabestiften oder Speicherkarten benutzt werden und nur diese Gegenstände aufnehmen können, während die vorliegende Erfindung ein "aktives" Fach zusätzlich zu den schon bekannten "inaktiven" Fächern besitzt, in dem beliebige Gegenstände aufgenommen werden können. Zusätzlich besteht die Möglichkeit, durch die schon oben genannten Mitteilungsfunktionen wie Klingeln, Vibrieren oder Blinken einen Benutzer zum Öffnen des Aufnahmefachs und gegebenenfalls zum Einnehmen von Medikamenten aufzufordern. Darüber hinaus besteht in Verbindung mit der Einnahme von Medikamenten die Möglichkeit, den Benutzer zu einem bestimmten Zeitpunkt die Art der einzunehmenden Medikamente und deren Dosierung zum gegebenen Zeitpunkt mitzuteilen. So kann also im weitesten Sinne von einem "aktiven" Fach gesprochen werden, welches den Benutzer an das Öffnen des Aufnahmefachs und gegebenenfalls die Entnahme eines Gegenstands (beispielsweise Medikamente) erinnert.

In einer weiter bevorzugten Ausführungsform ist die Aufnahmestruktur mit der Gehäusestruktur verbunden und bildet mit dieser eine Einheit, die nicht ohne weiteres in Aufnahmestruktur und Gehäusestruktur getrennt werden kann. Dabei ist es vorstellbar, dass die Aufnahmestruktur relativ zur Gehäusestruktur beweglich ist.

So ist beispielsweise ein Drehgelenk vorstellbar, welches Aufnahmestruktur und Gehäusestruktur verbindet und zueinander rotatorisch beweglich macht. Insbesondere ist eine angelenkte Ausgestaltung der Aufnahmestruktur und der Gehäusestruktur denkbar, bei der ein Drehgelenk an parallel zueinander verlaufenden Kanten der Gehäusestruktur und der Aufnahmestruktur angeordnet ist, so dass die Einheit aus Gehäusestruktur und Aufnahmestruktur in der Art eines Buches oder eines Laptops "aufgeklappt" werden kann, so dass im geöffneten Zustand ein Zugriff in das Aufnahmevolumen möglich ist. Insbesondere ist eine Aufnahmestruktur-Gehäusestruktur-Einheit denkbar, bei denen sowohl Aufnahmestruktur als auch Gehäusestruktur an zwei großflächigen Seitenflächen zueinander angeordnet werden können, wobei an einer, vorzugsweise einer der längeren Seitenkanten dieser großflächigen Fläche das Drehgelenk angeordnet ist und sich weiter bevorzugt über die gesamte Kante dieser Seitenfläche erstreckt. Das Gelenk, welches die Gehäusestruktur mit der Aufnahmestruktur verbindet, kann jedoch beliebig angeordnet werden, solange es nur ein Verschließen des Aufnahmevolumens durch Aufnahmestruktur und Gehäusestruktur durch Verschwenken dieser zueinander ermöglicht.

Ferner ist es vorstellbar, dass die Aufnahmestruktur zur Gehäusestruktur verschiebbar oder verdrehbar ist, wobei sie an der Gehäusestruktur geführt wird. So kann beispielsweise ein Schubgelenk vorgesehen werden, welches eine translatorische oder rotatorische Bewegung der Aufnahmestruktur relativ zur Gehäusestruktur ermöglicht, so dass bei bestimmten Stellungen die Aufnahmestruktur zur Gehäusestruktur ein Zugriff in das Aufnahmevolumen von außerhalb möglich ist.

Sowohl die Drehachse des angesprochenen Drehgelenks als auch die Schubachse des angesprochenen Schubgelenks kann in Verbindung mit der vorliegenden Erfindung sowohl eine senkrechte als auch eine parallele Komponente relativ zum Öffnungsquerschnitt des Aufnahmevolumens aufweisen. Zusammenfassend lässt sich also sagen, dass Aufnahmestruktur und Gehäusestruktur relativ zueinander beliebig beweglich sind, wobei in zumindest einer Stellung der Zugriff in das Aufnahmevolumen durch einen Öffnungsquerschnitt möglich ist. Also ist auch eine Kombination zwischen Drehgelenk und Schubgelenk in Form eines Drehschubgelenks oder auch jede andere beliebige Art eines die Aufnahmestruktur mit der Gehäusestruktur verbindenden Elements vorstellbar.

Es ist jedoch auch vorstellbar, dass zum Öffnen des Aufnahmevolumens, also zum Ermöglichen eines Zugriffs zum Aufnahmevolumen durch einen Öffnungsquerschnitt die Gehäusestruktur von der Aufnahmestruktur getrennt wird. Eine solche Ausgestaltung kann beispielsweise einem Schuhkarton ähneln, wobei die Mobiltelefon-Gehäusestruktur als Deckel fungiert. Jedoch kann die Gehäusestruktur von der Aufnahmestruktur auch in der Form getrennt werden, indem eine Führung, beispielsweise eine Schwalbenschwanzführung Aufnahmestruktur und Gehäusestruktur relativ zueinander führt, die Öffnungsbewegung der zueinander führenden Bauteile jedoch nicht durch eine Art Anschlag begrenzt ist, so dass die Gehäusestruktur von der Aufnahmestruktur "abgezogen" werden kann.

Ferner ist eine Ausgestaltung der vorliegenden Erfindung denkbar, bei der an der Aufnahmestruktur oder der Gehäusestruktur ein Verschlusselement angeordnet ist, beispielsweise ebenfalls durch ein Drehgelenk oder Schubgelenk oder ein Drehschubgelenk. So kann das Aufnahmevolumen durch das Verschlusselement unabhängig von der Stellung der Aufnahmestruktur zur Gehäusestruktur verschlossen werden. Das Verschlusselement kann also eine Art Deckel sein, mit welchem das Aufnahmevolumen verschlossen werden kann. Dies ist auch in Verbindung mit einem durch die Gehäusestruktur lediglich teilweise begrenzten Aufnahmevolumen denkbar, ohne dass eine Aufnahmestruktur vorgesehen ist. Ferner kann sich die Aufnahmestruktur insbesondere in Form eines "Schubladens" im verschlossenen Zustand innerhalb der Gehäusestruktur erstrecken und beispielsweise lediglich mit einer Seitenkante plan an der Außenkante der Gehäusestruktur abschließen. Es ist denkbar, dass diese Aufnahmestruktur translatorisch aus der Gehäusestruktur herausgezogen wird, um das Aufnahmevolumen zugänglich zu machen bzw. zu öffnen, jedoch ist es auch vorstellbar, dass die Aufnahmestruktur mittels eines Drehgelenks aus der Gehäusestruktur ausgeschwenkt oder herausgeschwenkt wird. Ferner kann die Gelenkachse des Drehgelenks parallel oder senkrecht zum Öffnungsquerschnitt des Aufnahmevolumens stehen. Grundsätzlich ist also eine translatorische Bewegung, eine rotatorische Bewegung oder eine daraus zusammengesetzte, beispielsweise eine Schwenkbewegung der Aufnahmestruktur aus oder innerhalb der Gehäusestruktur vorstellbar.

Andererseits ist es auch vorstellbar, dass sich die Aufnahmestruktur nur teilweise innerhalb der Gehäusestruktur erstreckt oder in verschlossenem Zustand des Aufnahmevolumens gänzlich außerhalb der Gehäusestruktur erstreckt. Dies ist beispielsweise dann der Fall, wenn die Aufnahmestruktur an die Gehäusestruktur angrenzt und zusammen mit dieser im verschlossenen Zustand das Öffnungsvolumen von der Umwelt abgrenzt bzw. den Öffnungsquerschnitt verschließt. Um eine möglichst kompakte Einheit aus Gehäusestruktur und Aufnahmestruktur zu erhalten, schließt die Aufnahmestruktur mit der Gehäusestruktur möglichst plan ab und weist zudem auch ähnliche oder gar gleiche Abmaße wie die Gehäusestruktur auf.

In der erfindungsgemäßen Ausführungsform sind die das Aufnahmevolumen verschließenden Elemente zueinander in ihrer verschließenden Stellung zueinander zu arretieren oder zu verrasten, so dass diese Stellung der Elemente zueinander beibehalten wird und das Aufnahmevolumen nur unter bestimmten Umständen geöffnet werden kann. Diese Umstände sind die Benutzung eines Schlüssels oder eines Passwortes.

In einer weiter bevorzugten Ausführungsform ist der aufzunehmende Gegenstand oder auch mehrere aufzunehmende Gegenstände innerhalb der Aufnahme oder des Aufnahmevolumens arretierbar bzw. in der Position relativ zum Aufnahmevolumen festgelegt. So ist insbesondere in Verbindung mit empfindlichen Gegenständen deren Verrutschen oder Stoßen gegen die Wände des Aufnahmevolumens verhinderbar. Dazu kann innerhalb des Aufnahmevolumens bzw. an der Gehäusestruktur oder Aufnahmestruktur ein Arretierungselement vorgesehen sein, mittels dem der Gegenstand positionell gegenüber der Gehäusestruktur oder der Aufnahmestruktur positionell festgelegt werden kann, vorzugsweise arretiert oder verrastet werden kann. So kann auch insbesondere ein Herausfallen des Gegenstandes aus dem Aufnahmevolumen oder der Aufnahmestruktur verhindert werden. Ferner besteht die Möglichkeit, dass das Aufnahmevolumen, bzw. die Aufnahmestruktur an die Abmaße des aufzunehmenden Gegenstandes angepasst ist und weiter bevorzugt diesen eng umschließt. Dies kann beispielsweise durch Vorsehen von formanpassungsfähigem Schaumstoff im Aufnahmevolumen geschehen.

In einer weiter bevorzugten Ausführungsform kann das Aufnahmevolumen in einem geöffneten Zustand beleuchtet werden, so dass dessen Inhalt gut zu sehen ist. Dies kann etwa durch LED-Lichtquellen geschehen, die dem Aufnahmevolumen zugeordnet bzw. zugewandt sind.

Auch ist es denkbar, dass das oben besprochene Aufnahmevolumen in mehrere unterschiedliche oder gleiche Teilvolumina unterteilt ist. Dies kann insbesondere in Verbindung mit mehrmals zu verabreichenden Medikamenten vorteilhaft sein. Auch ist es vorstellbar, dass nacheinander mehrere Teilvolumina zugänglich gemacht werden, um beispielsweise über den Tag verteilt einzelne Medikamentendosen zu verabreichen. Auch können einzelne Teilvolumina getrennt voneinander beleuchtet werden, wobei in diesem Zusammenhang eine Farbkodierung möglich ist.

Bei dem Mobiltelefon und dessen vielerlei elektronischer Möglichkeiten gestattet eine dem Mobiltelefon zugeordnete Steuereinheit das Öffnen des Aufnahmevolumens.

In diesem Zusammenhang ist es auch von Vorteil, wenn anhand dieser oder einer anderen Steuereinheit der Benutzer zum Öffnen des Aufnahmevolumens bzw. zur Entnahme des im Aufnahmevolumen befindlichen Gegenstands aufgrund voreingestellter Parameter auffordert. So kann der Benutzer auch über eine gespeicherte Stimme an die Einnahme seiner Medikamente erinnert werden, oder ein sichtbarer oder hörbarer Alarm erinnert an die Einnahme von Medikamenten zum richtigen Zeitpunkt. Ferner ist auch insbesondere in Verbindung mit Medikamenten eine Anzeige vorstellbar, welche die zu verabreichende Dosierung der Medikamente anzeigt.

Auch kann der Benutzer von einer Art Weck- oder Notdienst über das Mobiltelefon dazu aufgefordert oder daran erinnert werden, die im Aufnahmevolumen befindlichen Medikamente einzunehmen.

In einer weiteren bevorzugten Ausführungsform kann die Aufnahmestruktur an der Gehäusestruktur ansetzbar sein, insbesondere an diese fest anbringbar sein, im Speziellen an diese anklickbar sein. So ist es denkbar, dass die Aufnahmestruktur und die Gehäusestruktur korrespondierende Verbindungselemente aufweisen, mit der eine stabile Verbindung zwischen Gehäusestruktur und Aufnahmestruktur erzielt werden kann. Dies kann beispielsweise in Form von Rastelementen geschehen, die ineinander eingreifen und somit einen Formschluss zwischen Aufnahmestruktur und Gehäusestruktur herstellen. Ebenso denkbar sind Verbindungselemente, die eine kraftschlüssige Verbindung zwischen Gehäusestruktur und Aufnahmestruktur herstellen. So kann bei Bedarf, also wenn beispielsweise Medikamente mitgeführt werden sollen, an der Mobiltelefon-Gehäusestruktur einfach ein Aufnahmefach bzw. ein "Pillendöschen" an die Mobiltelefon-Gehäusestruktur angebracht bzw. angeklickt werden.

In Verbindung mit der hier beschriebenen Mobiltelefon-Gehäusestruktur und/oder Aufnahmestruktur ist eine Verwendung einer solchen Mobiltelefon-Gehäusestruktur und/oder Aufnahmestruktur zum Transport oder zur Aufnahme beliebiger Gegenstände, insbesondere nicht dem Telefon zuzuordnender Gegenstände, im Speziellen von Medikamenten, vorstellbar.

Bevorzugte Ausführungsformen werden anhand der beiliegenden Figuren näher erläutert, wobei die Erfindung alle hierin gezeigten Merkmale einzeln sowie in jedweder sinnvollen Kombination umfassen kann. Es zeigen:
- Figur 1: eine Ausführungsform einer Mobiltelefongehäusestruktur mit translatorisch aus der Gehäusestruktur herausbewegbarer Aufnahmestruktur
- Figur 2a und 2b: weitere Beispiele der Ausführungsform aus der Figur 1
- Figur 2c bis 2d: Beispiele gemäß der Ausführungsform aus der Figur 1, jedoch mit rotatorisch aus der Gehäusestruktur herausschwenkbarer Aufnahmestruktur
- Figur 3a: eine über ein parallel zur Öffnungsebene stehendes Gelenk mit der Aufnahmestruktur verbundene Gehäusestruktur
- Figur 3b: eine über ein orthogonal zur Öffnungsebene stehendes Gelenk mit der Aufnahmestruktur verbundene Gehäusestruktur
- Figur 3c: eine Gehäusestruktur mit außerhalb liegender und translatorisch dazu verschiebender Aufnahmestruktur
- Figur 4a: eine Ausführungsform ähnlich der Ausführungsform aus Figur 3a, jedoch mit innen liegendem Display und Tastatur und separatem Verschlusselement
- Figur 4b: eine Ausführungsform gemäß Figur 3a, jedoch mit innen liegendem Display und Tastatur
- Figur 5a: eine weitere Ausführungsform mit Kreditkarteneinschub
- Figur 5b: eine weitere Ausführungsform mit Schlüsseleinschub
- Figur 6: eine weitere Ausführungsform mit an der Gehäusestruktur anklickbarer Aufnahmestruktur.

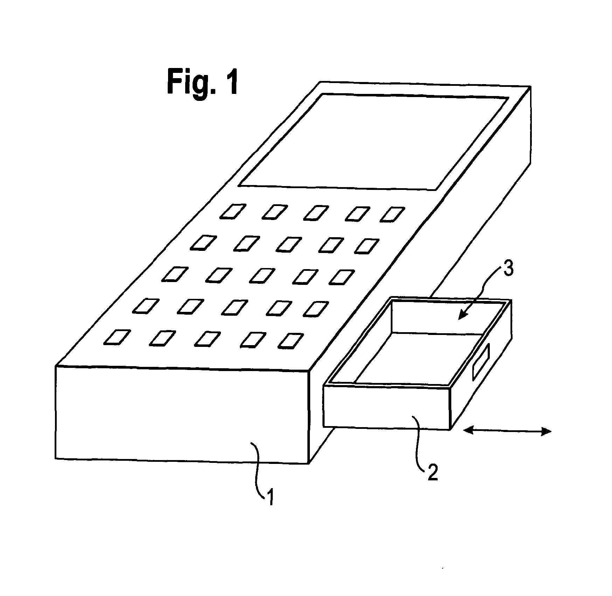

In der Figur 1 ist ein erfindungsgemäßes Mobiltelefon bzw. eine erfindungsgemäße Mobiltelefongehäusestruktur 1 zu sehen, welches in bekannter Weise ein Display und eine Tastatur auf der Oberseite der Gehäusestruktur 1 aufweist. Ferner umfasst die Gehäusestruktur 1 eine an einer seitlichen Längsseite der Gehäusestruktur 1 zu öffnende und translatorisch herausziehbare Aufnahmestruktur 2 in Form einer Schublade. Es ist zu sehen, dass durch Herausziehen der Aufnahmestruktur 2 aus der Gehäusestruktur 1 ein quaderförmiges Aufnahmevolumen 3 zugänglich wird, in dem beliebige Gegenstände, auch Gegenstände, die nicht zum bestimmungsgemäßen Gebrauch des Mobiltelefons erforderlich sind, aufgenommen werden können. Nach Aufnahme eines solchen Gegenstandes kann die Aufnahmestruktur 2 wieder in die Gehäusestruktur 1 zurückgeschoben werden. Ein Sichern der Aufnahmestruktur 2 gegen Herausfallen aus der Gehäusestruktur 1 ist selbstverständlich möglich, beispielsweise in Form eines Anschlags.

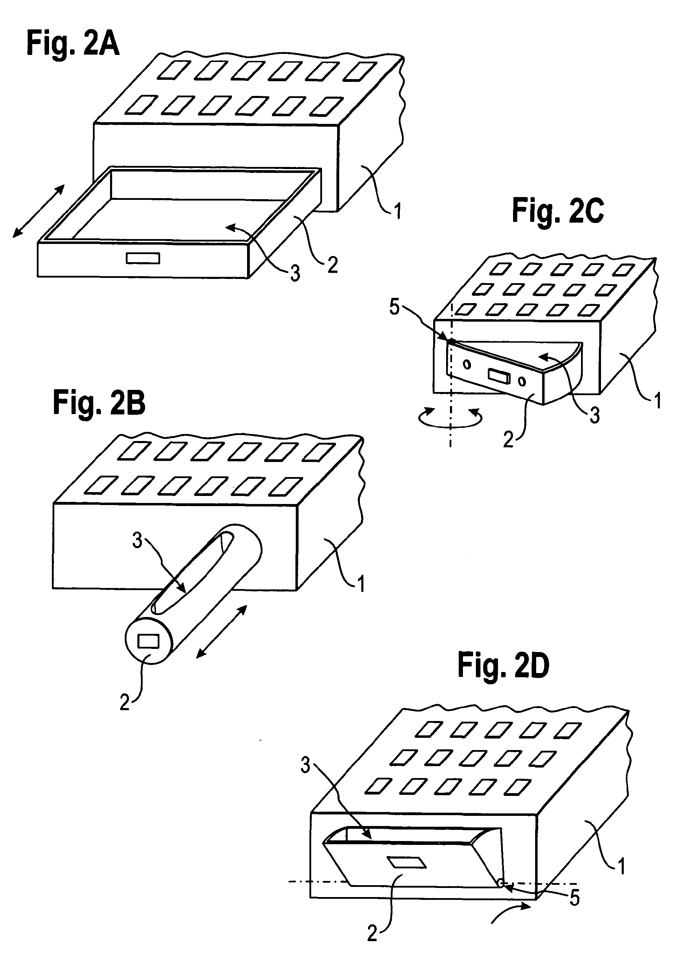

Aus der Figur 2 ist, ähnlich wie in der Figur 1, eine Aufnahmestruktur 2 in Form einer Schublade zu sehen, die jedoch an einer "unteren" Stirnseite der Gehäusestruktur 1 aus dieser herausziehbar ist.

In der Figur 2b ist eine, ähnlich wie in der Figur 2a an eine untere Stirnseite der Gehäusestruktur 1 herausziehbare Aufnahmestruktur 2 zu sehen, die jedoch einen runden Querschnitt und eine längliche Ausgestaltung aufweist. Ferner ist an der Oberseite der Aufnahmestruktur 2 eine ovale Öffnung zu sehen, anhand der der Zugang zu einem Aufnahmevolumen 3 ermöglicht wird.

In der Figur 2c ist eine an einem Gelenk 5 an der Gehäusestruktur 1 angelenkte Aufnahmestruktur 2 zu sehen, wobei durch Herausschwenken der Aufnahmestruktur 2 aus der Gehäusestruktur 1 um eine Hochachse der Gehäusestruktur 1 der Zugang zu einem Aufnahmevolumen 3 ermöglicht wird, wobei eine abhängig vom Öffnungsgrad kreissegmentförmige Zugriffsöffnung den Zugang zum Aufnahmevolumen gestattet.

In der Figur 2d ist eine Aufnahmestruktur 2, welche um eine Querachse der Gehäusestruktur 1 mittels eines Gelenks 5 herausgeschwenkt werden kann.

Hier soll eine Hochachse als eine orthogonal zu den großen Seitenflächen, beispielsweise einer Seitenfläche mit der Tastatur und dem Display stehende Achse verstanden werden, während mit einer Querachse eine parallel zu den großen Seitenflächen, und orthogonal zu den langen Seitenflächen der Gehäusestruktur verlaufende Achse gemeint sein soll. Eine orthogonal zu Hoch- und Querachse verlaufende Achse ist hier als eine Längsachse anzusehen.

Selbstverständlich ist die vorliegende Erfindung nicht lediglich auf die gezeigten Ausrichtungen der Gelenke oder Ausschub- bzw. Ausschwenkrichtungen beschränkt, vielmehr sind beliebige Ausrichtungen oder Öffnungsbewegungen und -richtungen an jeder beliebigen Fläche der Gehäusestruktur 1 denkbar.

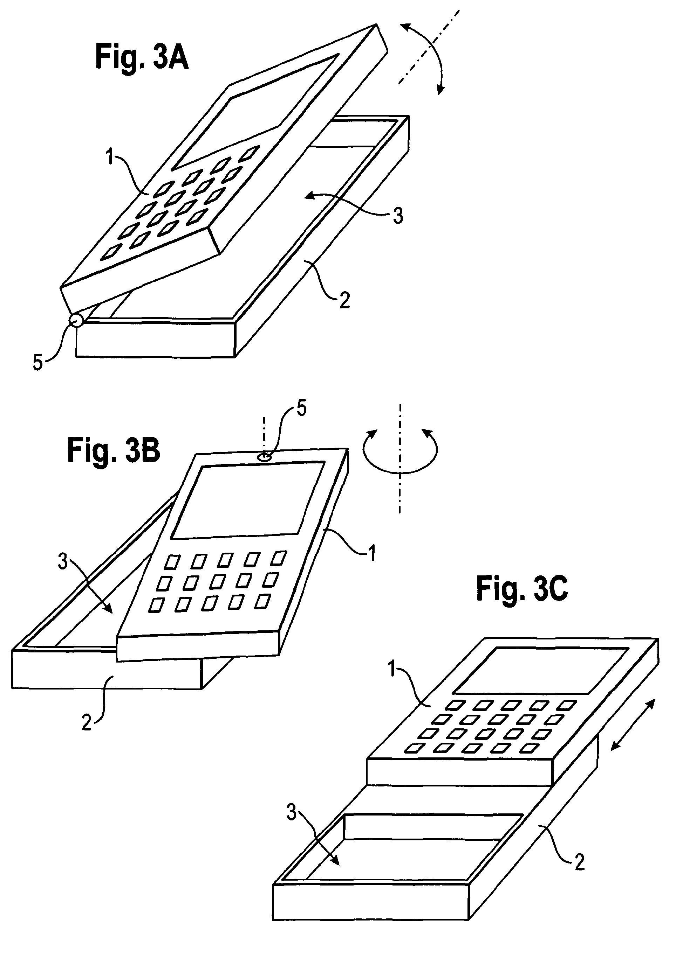

Weitere Ausführungsformen der vorliegenden Erfindung sind in den Figuren 3a bis 3c gezeigt, wobei in der Figur 3a eine an die Gehäusestruktur 1 angelenkte Aufnahmestruktur 2 zu sehen ist, die mittels eines Drehgelenks 5 um die Längsachse zur Gehäusestruktur 1 verschwenkbar ist. Sowohl das Display als auch die Tastatur des Mobiltelefons sind auf der außen liegenden großen Seitenfläche angeordnet, während die Gesamtheit aus Gehäusestruktur 1 und Aufnahmestruktur 2 in der Art eines Buches oder eines Laptops aufschwenkbar ist, um Zugang zu dem Aufnahmevolumen 3 zu ermöglichen. Hier muss das Gelenk 5 ebenfalls nicht zwingend auf einer langen Seitenkante der Gehäusestruktur 1 bzw. der Aufnahmestruktur 2 angeordnet sein, vielmehr kann das Gelenk 5 auch an einer, beispielsweise oberhalb des Displays angeordneten kurzen Seitenkante angeordnet sein.

In der Figur 3b ist ein Mobiltelefon bzw. eine Mobiltelefongehäusestruktur 1 zu sehen, wobei Gehäusestruktur 1 und Aufnahmestruktur 2 anhand eines oberhalb des Displays angeordneten und orthogonal zur Öffnungsebene des Aufnahmevolumens 3 stehenden Gelenks 5 miteinander verbunden und um die Hochachse der Gehäusestruktur 1 verschwenkbar sind. Auch hier kann Ort und Ausrichtung des Gelenks 5 beliebig verändert werden, ohne vom Gedanken der vorliegenden Erfindung abzuweichen.

In der Figur 3c ist eine Ausführungsform mit einer translatorisch zu der Gehäusestruktur 1 verschiebbaren Aufnahmestruktur 2 in Richtung der Längsachse der Gehäusestruktur 1 gezeigt. Die Führung der Aufnahmestruktur 2 an der Gehäusestruktur 1 kann anhand eines nicht gezeigten Schubgelenks geschehen, wobei die Bewegung in einer Endstellung vorzugsweise begrenzt und weiter bevorzugt arretierbar ist.

Ferner sind bei allen hier gezeigten Ausführungsformen der vorliegenden Erfindung Arretierungen möglich, welche die Aufnahmestruktur 2 relativ zur Gehäusestruktur 1 in einer Öffnungs-, einer Schließ- oder einer beliebigen dazwischen liegenden Stellungen arretiert.

Die Ausführungsformen gemäß den Figuren 1 bis 2d weisen an der Stirnseite der Aufnahmestruktur 2 stets einen nicht bezeichneten Knopf auf, durch dessen Betätigung das Herausfahren bzw. Herausschwenken der Aufnahmestruktur 2 aus der Gehäusestruktur 1 und das damit verbundene Öffnen des Aufnahmevolumens 3 ermöglicht oder bevorzugt bewirkt wird.

Bei den in den Figuren 3a bis 3c gezeigten Ausführungsformen weist die Aufnahmestruktur 2 zumindest in einer horizontalen, also einer zum Display parallel stehenden Ebene ähnliche Abmaße auf wie die Gehäusestruktur 1, so dass die Gesamtheit aus Gehäusestruktur 1 und Aufnahmestruktur 2 kompakt ausgestaltet ist. Gemein ist in den Ausführungsformen aus den Figuren 3a bis 3c ferner das außen liegende Display mit außen liegender Tastatur, also die Anordnung des Displays und der Tastatur auf der der Aufnahmestruktur 2 abgewandten Seite bzw. die in die gleiche Richtung wie der Öffnungsquerschnitt des Aufnahmevolumens 3 weisende Anordnung von Display und Tastatur des Mobiltelefons.

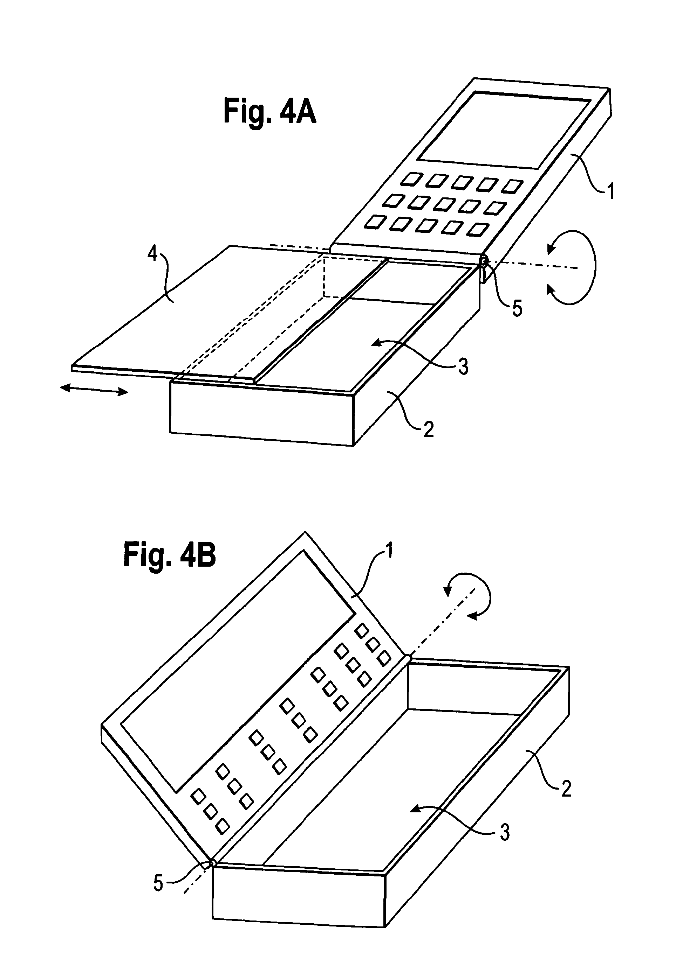

In der Figur 4a ist eine weitere Ausführungsform zu sehen, und zwar mit innen liegender Tastatur und innen liegendem Display, welches im geschlossenen Zustand dem Öffnungsquerschnitt des Öffnungsvolumens 3 gegenüberliegt bzw. an diesem anliegt. Ferner ist es bei dieser gezeigten Ausführungsform möglich, den Öffnungsquerschnitt des Aufnahmevolumens 3 sowohl durch Verschwenken der Gehäusestruktur 1 um das Gelenk 5 als auch durch translatorisches Verschieben des Verschlusselements 4 über den Öffnungsquerschnitt des Aufnahmevolumens 3 zu verschließen. Somit ist es möglich, das Display und die Tastatur des Mobiltelefons zu nutzen, ohne zwingend das Aufnahmevolumen 3 innerhalb der Aufnahmestruktur 2 zu öffnen.

In der Figur 4b ist eine weitere Ausführungsform mit innen liegendem Display und innen liegender Tastatur zu sehen, wobei das Gelenk 5 jedoch an einer längeren Außenkante zwischen Gehäusestruktur 1 und Aufnahmestruktur 2 liegt.

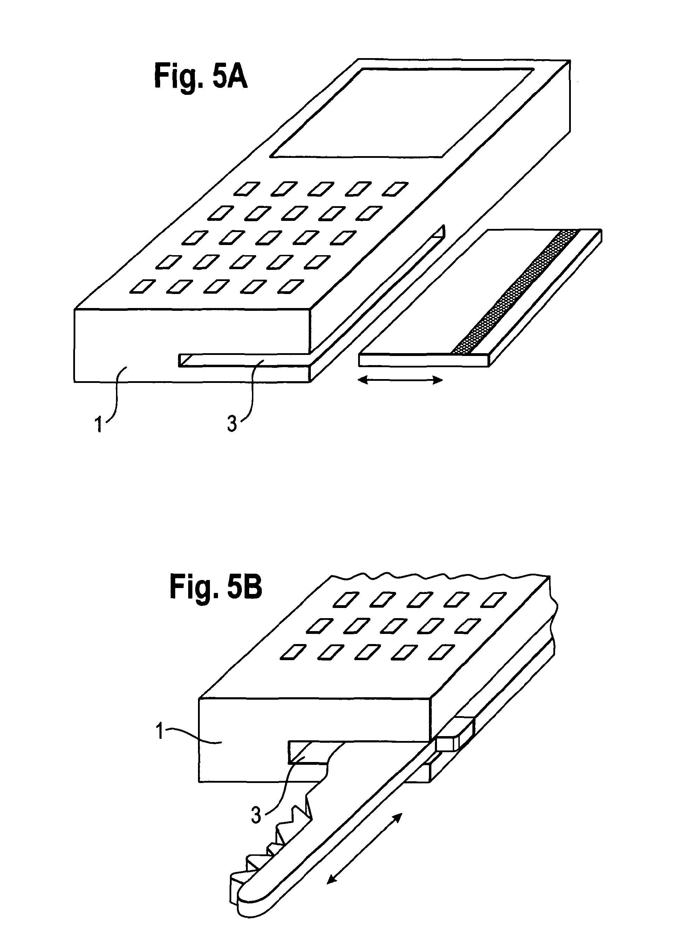

In der Figur 5a ist eine Gehäusestruktur 1 gezeigt, welche keine Aufnahmestruktur 2 umfasst, sondern lediglich ein Aufnahmevolumen 3 teilweise begrenzt. So ist das Aufnahmevolumen 3 zu zwei Längsseiten der Gehäusestruktur 1 stets geöffnet und dazu ausgestaltet, Karten mit genormten Abmaßen, wie etwa Kreditkarten aufzunehmen. Dabei wird die Kreditkarte mehr oder weniger eng von der Gehäusestruktur 1 umschlossen. Ferner kann eine Arretierungsvorrichtung vorgesehen sein, die die Kreditkarte vor Herausfallen aus der Öffnung des Aufnahmevolumens 3 sichert.

In der Figur 5b ist ebenfalls eine Gehäusestruktur 1 ohne eine separate Aufnahmestruktur 2 zu sehen, wobei im gezeigten Beispiel ein Ersatzschlüssel aus dem Aufnahmevolumen 3 translatorisch ein- und ausgefahren werden kann. Anhand eines nicht bezeichneten außen liegenden Griffs kann der Schlüssel dann bei Bedarf translatorisch aus dem Aufnahmevolumen 3 der Gehäusestruktur 1 herausgeschoben werden, wobei ein Arretieren gegen unbeabsichtigtes Herausgleiten des Schlüssels aus der "eingefahrenen" Stellung des Schlüssels denkbar und bevorzugt ist.

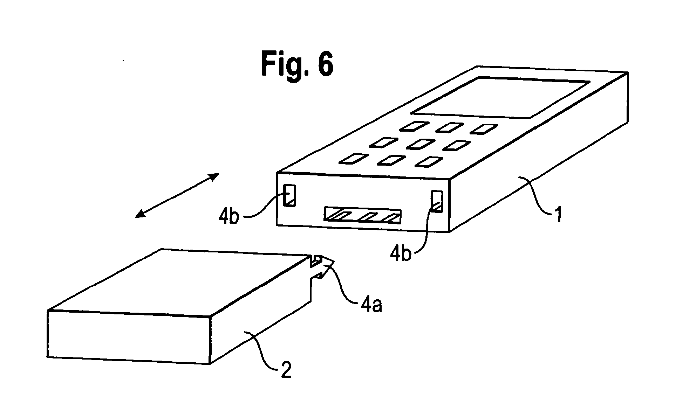

In der Figur 6 ist eine Gehäusestruktur 1 zu sehen, die an ihrer unteren Stirnseite zwei Eingriffsausnehmungen 4b aufweist, in welche korrespondierende an der Aufnahmestruktur 2 vorstehend angebrachte Eingriffselemente 4a eingreifen können. Hierdurch wird zwischen der Gehäusestruktur 1 und der Aufnahmestruktur 2 ein Formschluss hergestellt, so dass sich die Mobiltelefongehäusestruktur 1 nach unten in Form einer Aufnahmestruktur 2 fort erstreckt. Selbstverständlich ist eine Vielzahl anderer Anbringungsorte der Aufnahmestruktur 2 an der Gehäusestruktur 1 denkbar, beispielsweise an der Rückseite der Gehäusestruktur 1.

Durch einen nicht gezeigten Lösemechanismus kann die Aufnahmestruktur 2 von der Gehäusestruktur 1 getrennt werden, so dass eine der Gehäusestruktur 1 zugewandte und in Figur 6 nicht sichtbare Öffnung an der Aufnahmestruktur 2 zugänglich wird, durch die Gegenstände, beispielsweise Medikamente entnommen werden können. Selbstverständlich kann die Zugangsöffnung auch an jeder anderen Stelle der Aufnahmestruktur 2 angeordnet sein, beispielsweise an den großflächigen Ober- oder Unterseiten der Aufnahmestruktur 2. Zwischen den Eingriffsausnehmungen 4b an der unteren Stirnseite der Mobiltelefongehäusestruktur 1 ist ferner ein nicht bezeichneter Steckeranschluss gezeigt, der bei vielen Mobiltelefonen ohnehin vorhanden ist und hier beispielsweise dazu genutzt werden kann, das Aufnahmefach durch eine an der Aufnahmestruktur angeordnete Beleuchtungseinrichtung zu beleuchten. Ferner ist es denkbar, diejenigen Eingriffsausnehmungen an der Gehäusestruktur 1 zur Fixierung der Aufnahmestruktur 2 zu nutzen, welche ebenso zum Haltern oder Fixieren der Mobiltelefongehäusestruktur 1 in Ladeschalen oder Kfz-Freisprecheinrichtungen genutzt werden. Vorteilhafterweise kann bei der in Figur 6 gezeigten Ausführungsform das "Pillendöschen" 2 nur bei Bedarf an die Mobiltelefongehäusestruktur 1 angeklickt werden, wobei bei Nichtnutzung der Aufnahmestruktur 2 ein kleineres und handlicheres Mobiltelefon benutzt werden kann.

## Patentansprüche

1. Mobiltelefon, mit einer Mobiltelefon-Gehäusestruktur (1), wobei die Mobiltelefon-Gehäusestruktur (1) ein Aufnahmevolumen (3) zumindest teilweise begrenzt, in dem ein zum bestimmungsgemäßen Gebrauch des Mobiltelefons nicht erforderlicher Gegenstand aufgenommen werden kann, ferner einer Aufnahmestruktur (2), welche zusammen mit der Gehäusestruktur (1) das Aufnahmevolumen (3) verschließt, wobei die das Aufnahmevolumen (3) verschließenden Elemente (1, 2, 4) in ihrer das Aufnahmevolumen (3) verschließenden Stellung arretierbar sind, **dadurch gekennzeichnet, dass**
eine dem Mobiltelefon zugeordnete Steuereinheit nach Eingabe eines Schlüssels oder eines Passworts das Öffnen des Aufnahmevolumens erlaubt.

2. Mobiltelefon gemäß Anspruch 1, wobei die Aufnahmestruktur (2) mit der Gehäusestruktur (1) verbunden und relativ zu dieser bewegbar ist.

3. Mobiltelefon gemäß Anspruch 2, wobei die Aufnahmestruktur (2) an der Mobiltelefon-Gehäusestruktur (1) angelenkt oder verschiebbar/verdrehbar/verschwenkbar an der Mobiltelefon-Gehäusestruktur (1) geführt ist.

4. Mobiltelefon gemäß Anspruch 3, wobei die Achse eines die Aufnahmestruktur (2) mit der Mobiltelefon-Gehäusestruktur (1) verbindenden Gelenks (5) parallel oder orthogonal zu einem Öffnungsquerschnitt des Aufnahmevolumens (3) steht.

5. Mobiltelefon gemäß einem der vorgehenden Ansprüche, wobei zum Öffnen des Aufnahmevolumens (3) die Mobiltelefon-Gehäusestruktur (1) von der Aufnahmestruktur (3) getrennt wird.

6. Mobiltelefon gemäß einem der vorgehenden Ansprüche, wobei die Mobiltelefon-Gehäusestruktur (1) oder die Aufnahmestruktur (2) ein Verschlusselement (4) umfasst, mit dem das Aufnahmevolumen (3) vorzugsweise unabhängig von der relativen Stellung der Mobiltelefon-Gehäusestruktur (1) zur Aufnahmestruktur (2) verschließbar ist.

7. Mobiltelefon gemäß einem der vorgehenden Ansprüche, wobei sich die Aufnahmestruktur (2) im verschlossenen Zustand innerhalb der Mobiltelefon-Gehäusestruktur (1) erstreckt und vorzugsweise plan mit der Mobiltelefon-Gehäusestruktur (1) abschließt.

8. Mobiltelefon gemäß einem der vorgehenden Ansprüche, wobei die Aufnahmestruktur (2) im verschlossenen Zustand an die Mobiltelefon-Gehäusestruktur (1) angrenzt, und wobei vorzugsweise die Abmaße der Aufnahmestruktur (2) so bemessen sind, dass die Aufnahmestruktur (2) mit der Mobiltelefon-Gehäusestruktur (1) kompakt abschließt.

9. Mobiltelefon gemäß einem der vorgehenden Ansprüche, wobei die das Aufnahmevolumen (3) verschließenden Elemente (1, 2, 4) in ihrer das Aufnahmevolumen (3) verschließenden Stellung abschließbar sind.

10. Mobiltelefon gemäß einem der vorgehenden Ansprüche, wobei der aufzunehmende Gegenstand innerhalb des Aufnahmevolumens (3) arretierbar ist und/oder das Aufnahmevolumen (3) geometrisch an den aufzunehmenden Gegenstand angepasst ist und diesen bevorzugt eng umschließt.

11. Mobiltelefon gemäß einem der vorgehenden Ansprüche, wobei das Aufnahmevolumen (3) im geöffneten Zustand beleuchtet wird.

12. Mobiltelefon gemäß einem der vorgehenden Ansprüche, wobei das Aufnahmevolumen (3) in mehrere Teilvolumina unterteilt ist, die vorzugsweise separat voneinander beleuchtet werden können.

13. Mobiltelefongemäß einem der vorgehenden Ansprüche, wobei die dem Mobiltelefon zugeordnete Steuereinheit die Entnahme des im Aufnahmevolumen (3) befindlichen Gegenstands aufgrund voreingestellter Parameter gestattet oder verhindert.

14. Mobiltelefon gemäß einem der vorgehenden Ansprüche, wobei die dem Mobiltelefon zugeordnete Steuereinheit den Benutzer zum Öffnen des Aufnahmevolumens (3) bzw. zur Entnahme des im Aufnahmevolumen (3) befindlichen Gegenstands aufgrund voreingestellter Parameter auffordert.

15. Verwendung eines Mobiltelefons gemäß einem der vorgehenden Ansprüche zum Transport bzw. zur Aufnahme von beliebigen Gegenständen, insbesondere nicht dem Mobiltelefon zuzuordnenden Gegenständen.

## Claims

1. A mobile telephone, comprising: a mobile telephone housing structure (1), wherein the mobile telephone housing structure (1) at least partially delineates an accommodating volume (3) in which an object can be accommodated which is not necessary for the proper use of the mobile telephone; and an accommodating structure (2) which together with the housing structure (1) closes the accommodating volume (3), wherein the elements (1, 2, 4) which close the accommodating volume (3) can be locked in place in the position in which they close the accommodating volume (3),
**characterised in that**
a control unit which is assigned to the mobile telephone allows the accommodating volume to be opened once a key or password has been inputted.

2. The mobile telephone in accordance with Claim 1, wherein the accommodating structure (2) is connected to the housing structure (1) and can be moved relative to it.

3. The mobile telephone in accordance with Claim 2, wherein the accommodating structure (2) is hinged on the mobile telephone housing structure (1) or is guided on the mobile telephone housing structure (1) such that it can be shifted/rotated/pivoted.

4. The mobile telephone in accordance with Claim 3, wherein the axis of a joint (5) which connects the accommodating structure (2) to the mobile telephone housing structure (1) is parallel or orthogonal to an opening cross-section of the accommodating volume (3).

5. The mobile telephone in accordance with any one of the preceding claims, wherein the mobile telephone housing structure (1) is separated from the accommodating structure (2) in order to open the accommodating volume (3).

6. The mobile telephone in accordance with any one of the preceding claims, wherein the mobile telephone housing structure (1) or the accommodating structure (2) comprises a shutter element (4) using which the accommodating volume (3) can be closed, preferably independently of the relative position of the mobile telephone housing structure (1) with respect to the accommodating structure (2).

7. The mobile telephone in accordance with any one of the preceding claims, wherein when it is closed, the accommodating structure (2) extends within the mobile telephone housing structure (1) and preferably terminates level with the mobile telephone housing structure (1).

8. The mobile telephone in accordance with any one of the preceding claims, wherein when it is closed, the accommodating structure (2) adjoins the mobile telephone housing structure (1), and wherein the dimensions of the accommodating structure (2) are preferably set such that the accommodating structure (2) terminates compactly with the mobile telephone housing structure (1).

9. The mobile telephone in accordance with any one of the preceding claims, wherein the elements (1, 2, 4) which close the accommodating volume (3) can be locked in the position in which they close the accommodating volume (3).

10. The mobile telephone in accordance with any one of the preceding claims, wherein the object to be accommodated can be locked in place within the accommodating volume (3) and/or the accommodating volume (3) is geometrically adapted to the object to be accommodated and preferably encloses it tightly.

11. The mobile telephone in accordance with any one of the preceding claims, wherein the accommodating volume (3) is illuminated when it is open.

12. The mobile telephone in accordance with any one of the preceding claims, wherein the accommodating volume (3) is sub-divided into a number of partial volumes which can preferably be illuminated separately from each other.

13. The mobile telephone in accordance with any one of the preceding claims, wherein the control unit which is assigned to the mobile telephone allows or prevents the removal of the object situated in the accommodating volume (3) on the basis of pre-set parameters.

14. The mobile telephone in accordance with any one of the preceding claims, wherein the control unit which is assigned to the mobile telephone prompts the user to open the accommodating volume (3) and/or remove the object situated in the accommodating volume (3) on the basis of pre-set parameters.

15. The use of a mobile telephone in accordance with any one of the preceding claims for transporting and/or accommodating any objects, in particular objects which are not to be assigned to the mobile telephone.

## Revendications

1. Téléphone mobile ayant une structure de boîtier de téléphone mobile (1), dans lequel la structure de boîtier de téléphone mobile (1) délimite au moins en partie un volume de réception (3) dans lequel peut être logé un objet non requis pour l'utilisation prévue du téléphone mobile, ainsi qu'une structure de réception (2) qui, ensemble avec la structure de boîtier (1), ferme le volume de réception (3), dans lequel les éléments (1, 2, 4) fermant le volume de réception (3) peuvent être bloqués dans leur position de fermeture du volume de réception (3),
**caractérisé en ce que**
une unité de commande couplée au téléphone mobile permet l'ouverture du volume de réception après l'entrée d'un code ou d'un mot de passe.

2. Téléphone mobile selon la revendication 1, dans lequel la structure de réception (2) est reliée à la structure de boîtier (1) et peut être déplacée par rapport à celle-ci.

3. Téléphone mobile selon la revendication 2, dans lequel la structure de réception (2) est articulée sur la structure de boîtier de téléphone mobile (1) ou est guidée sur la structure de boîtier de téléphone mobile (1) de manière à pouvoir bouger/tourner/pivoter.

4. Téléphone mobile selon la revendication 3, dans lequel l'axe d'une charnière (5) reliant la structure de réception (2) à la structure de boîtier de téléphone mobile (1) est parallèle ou orthogonal à une section transversale d'ouverture du volume de réception (3).

5. Téléphone mobile selon l'une des revendications précédentes, dans lequel la structure de boîtier de téléphone mobile (1) est séparée de la structure de réception (3) pour l'ouverture du volume de réception (3).

6. Téléphone mobile selon l'une des revendications précédentes, dans lequel la structure de boîtier de téléphone mobile (1) ou la structure de réception (2) inclut un élément de fermeture (4), au moyen duquel le volume de réception (3) peut être fermé, de préférence indépendamment de la position relative de la structure de boîtier de téléphone mobile (1) par rapport à la structure de réception (2).

7. Téléphone mobile selon l'une des revendications précédentes, dans lequel la structure de réception (2) s'étend, à l'état fermé, à l'intérieur de la structure de boîtier de téléphone mobile (1) et se ferme de préférence à plat avec la structure de boîtier de téléphone mobile (1).

8. Téléphone mobile selon l'une des revendications précédentes, dans lequel la structure de réception (2), à l'état fermé, borde la structure de boîtier de téléphone mobile (1), et dans lequel les dimensions de la structure de réception (2) sont de préférence déterminées de telle sorte que la structure de réception (2) ferme la structure de boîtier de téléphone mobile (1) de manière compacte.

9. Téléphone mobile selon l'une des revendications précédentes, dans lequel les éléments (1, 2, 4) fermant le volume de réception (3) peuvent être verrouillés dans leur position de fermeture du volume de réception (3).

10. Téléphone mobile selon l'une des revendications précédentes, dans lequel l'objet à recevoir à l'intérieur du volume de réception (3) peut être bloqué et/ou le volume de réception (3) est géométriquement adapté à l'objet à recevoir et entoure celui-ci de préférence de manière serrée.

11. Téléphone mobile selon l'une des revendications précédentes, dans lequel le volume de réception (3) est éclairé à l'état ouvert.

12. Téléphone mobile selon l'une des revendications précédentes, dans lequel le volume de réception (3) est divisé en plusieurs volumes partiels qui peuvent être éclairés de préférence séparément les uns des autres.

13. Téléphone mobile selon l'une des revendications précédentes, dans lequel l'unité de commande couplée au téléphone mobile autorise ou empêche l'extraction de l'objet se trouvant dans le volume de réception (3) sur la base d'un paramètre prédéfini.

14. Téléphone mobile selon l'une des revendications précédentes, dans lequel l'unité de commande couplée au téléphone mobile impose à l'utilisateur d'ouvrir le volume de réception (3) ou d'extraire l'objet se trouvant dans le volume de réception (3) sur la base d'un paramètre prédéfini.

15. Utilisation d'un téléphone mobile selon l'une des revendications précédentes pour le transport ou la réception d'objets quelconques, en particulier d'objets non associés au téléphone mobile.
